# EUROPEAN PATENT APPLICATION

(11) **EP 1 037 406 A2**
(43) Date of publication of application: **20.09.2000**
(21) Application number: 00104544.2
(22) Date of filing: 13.03.2000
(51) Int. Cl.: H04B 7/212

(54) **Uniformly distributed control burst structure for the uplink of a processing satellite communication system**

(30) Priority: 16.03.1999 US 270358
(71) Applicant: TRW Inc., Redondo Beach, California 90278 (US)
(72) Inventor: Wright, David A., Solana Beach, CA 92075 (US); Linsky, Stuart L., San Pedro, CA 90732 (US)
(74) Representative: Schmidt, Steffen J., Dipl.-Ing.

(57) **Abstract**

The present invention provides an uplink frame structure in a satellite communication system, and a method for providing control access to a plurality of user terminals transmitting the inventively structured uplink frames. The uplink frame structure comprises a superframe (200) which includes a predetermined number of individual frames (250). Each individual frame comprises a traffic burst field (202-220) and a control burst field (221-239), where the control burst fields (221-239) may be located at the same position within each frame (250). Each control burst field (221-239) further comprises several individual control time slots (302). The individual control time slots (302) may include, for example, timing probes and orderwire information. The present method includes establishing a superframe comprising a predetermine number of individual frames (402), determining a total number of individual control time slots (404), and establishing a control burst field in each of the individual frames (406). The method further includes distributing the control time slots among the individual frames by subdividing each control burst field into several individual control time slots (408), and allocating the individual control time slots to individual user terminals (410). The method may, for example, subdivide each control burst field into an equal number of individual control time slots. The method may further include the step of transmitting a timing probe and/or orderwire information in at least one of the individual control time slots.

## Description

### BACKGROUND OF THE INVENTION

The present invention relates to satellite communication systems. More specifically, the invention relates to a uniformly distributed synchronization burst structure for the uplink of a processing satellite communication system.

Today, satellite systems commonly transmit and receive communications signals to and from user terminals. Such satellite based communications systems may utilize a constellation of satellites to relay communications signals to and from the user terminals (fixed or mobile). Each satellite includes at least one antenna which defines the satellite's coverage region on the earth called its footprint. The satellite antenna(s) may divide the footprint into multiple beam spots called cells, or the footprint may be a single cell. Each cell is assigned one or more frequency bands (subbands), in which communications signals travel between the satellite and each user terminal within that cell.

The user terminals communicate along preassigned communications channels in the subband. The transmission of information along a preassigned communications channel from an earth station to a satellite occurs on the uplink, and the transmission of information along a preassigned communications channel from a satellite to an earth station occurs on the downlink.

Time division multiple access (TDMA) techniques are often used on the uplink. With TDMA, multiple user terminals in one cell may individually transmit on one particular carrier frequency during discrete intervals of time. Each user terminal is assigned one or more time intervals (i.e., time slots) during which it may communicate over the shared carrier frequency.

In one implementation of TDMA, part of the transmission time is allocated for sending control bursts on an uplink. One type of control burst may, for example, include orderwire information, which provides a means for communicating signaling and other control information. Another type of control burst is called a synchronization burst (referred to below as a sync burst). Sync bursts may, for example, include timing probes. Timing probes generally contain timing reference information, and serve as part of an uplink time synchronization scheme for the satellite communications system. Generally, each user terminal in either standby or active mode is assigned one or more control burst time slots during which that user transmits control bursts.

Time synchronization is an important aspect of satellite communications systems. When a receiver obtains and demodulates a time-division multiplexed signal, the result is a continuous sequence of information corresponding to the sampled pulses representing the multiplexed signals. The information must be sorted to associate the correct information with the correct signal. The above-described sorting process is often referred to as demultiplexing. In order to properly demultiplex the signals, the receiver needs to know when each frame begins. Frame delineation may be determined through a process referred to as frame synchronization.

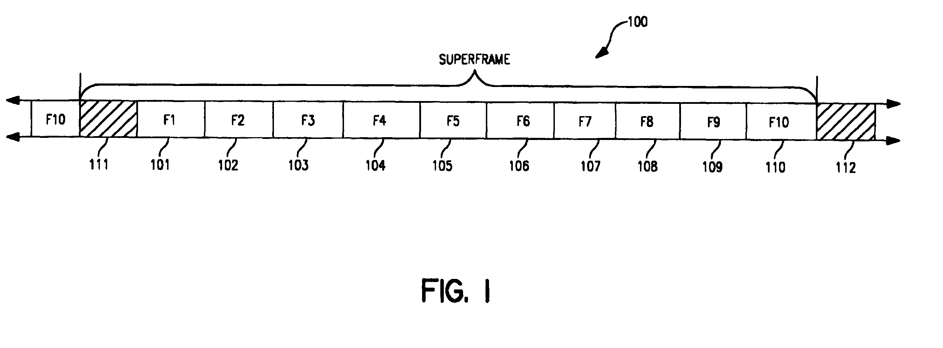

Generally, to accomplish frame synchronization, each user terminal is assigned a particular frame and time slot within that frame during which to transmit a control burst. It is generally not necessary for each terminal to send a control burst at every frame. Thus, a "superframe" approach is ordinarily taken. A superframe is generally characterized by a sequence of a predetermined number of consecutive frames. As illustrated in Figure 1, part of each frame is allocated to sending substantive information (referred to below as traffic burst fields 101-110), and part of each frame is used for sending control bursts (referred to below as control burst fields 111 and 112).

Past synchronization methods generally dedicated a single segment 111 of the superframe 100 to control burst access, and all terminals launched their control bursts during this dedicated period 111. Thus, in accordance with past superframe approaches, several traffic burst fields 101-110 elapse between control burst fields 111 and 112. For example, in a 930 millisecond (ms) superframe 100 with 10 frames, each frame is 93.0 ms long. If 90 ms of each of the 93 ms frames is dedicated to traffic burst fields 101-110, then the remaining 3 ms may be dedicated to a control burst field 111 within that frame 100. With 10 frames and 3 ms per frame dedicated to a control burst field 111, the control burst field 111 in this example is 30 ms long.

There are several disadvantages associated with this prior superframe approach to control burst structure. First, although the control burst fields occur infrequently (i.e., every 900 ms in the example above), the control burst fields occupy a significant time interval during which normal traffic uplink activity is suspended.

In the example described above, there is typically a 90 ms gap between traffic bursts. However, when a control burst field intervenes between traffic bursts, there is a 120 ms gap (90 ms + 30 ms) between traffic bursts, resulting in a highly irregular periodicity of the transmission cadence.

Another disadvantage associated with prior techniques is that the traffic flow of substantive information experiences a cell delay variation because the flow of traffic bursts is interrupted and the interval between traffic bursts in the uplink is not constant. Cell delay variation is generally considered to be the time that elapses from the moment a cell is transmitted by the sender to the moment that cell is received at the intended destination. A large cell delay variation is undesirable because it results in a highly irregular periodicity of the transmission cadence.

To account for these problems, in the past, the buffer size requirements on the downlink were substantially increased to provide expanded queuing capability on the satellite. Consequently, a significant amount of additional hardware had to be incorporated into past satellites in order to support this large buffer. The additional hardware required in past systems resulted in a substantial increase in both weight, cost and complexity of the satellites.

A need exists in the processing satellite communications industry for an improved method and structure for implementing synchronization of user terminals communicating on an uplink in a satellite communications system.

### SUMMARY OF INVENTION

It is an object of the present invention to provide an uplink synchronization technique for a satellite communications systems.

It is an object of the present invention to reduce cell delay variations in a satellite communication system.

It is another object of the present invention to reduce the buffer sizes for satellite downlink queues in a satellite communication system.

It is another objective of the present invention to reduce the buffering requirements of terrestrial user terminals in a satellite communication system.

It is another objective of the present invention to regulate the periodicity of the transmission cadence in a satellite communication system.

One or more of the foregoing objectives is met in whole or in part by an improved uplink frame structure in a satellite communication system, and a method for synchronizing a plurality of user terminals transmitting in the uplink. The uplink frame structure uses a superframe which includes a predetermined number of individual frames. Each individual frame includes a traffic burst field and a control burst field. The control burst field may be contiguously or non-contiguously located in each frame, for example. Further, each control burst field is further divided into several individual control time slots. The individual control time slots are allocated to individual user terminals. The individual control time slots may include, for example, timing probes and orderwire information.

The present synchronization method includes the steps of establishing a superframe of a predetermined number of individual frames, determining a total number of individual control time slots, and establishing a control burst field in each of the individual frames. The method then distributes the control time slots among the individual frames by subdividing each control burst field into several individual control time slots, and allocating the individual control time slots to individual user terminals. The method may, for example, subdivide each control burst field into an equal number of individual control time slots. The user terminals may then transmit timing probes or orderwire information in the individual control time slots.

### BRIEF DESCRIPTION OF THE DRAWINGS

Fig. 1 illustrates a prior implementation at a synchronization burst structure.
Fig. 2 illustrates a uniformly distributed synchronization burst structure in accordance with the present invention.
Fig. 3 illustrates a detailed drawing of a single control burst field.
Fig. 4 illustrates a flow chart of a method of synchronizing several user terminals transmitting on an uplink in a satellite communications system in accordance with an embodiment of the present invention.

### DETAILED DESCRIPTION OF THE PREFERRED EMBODIMENT

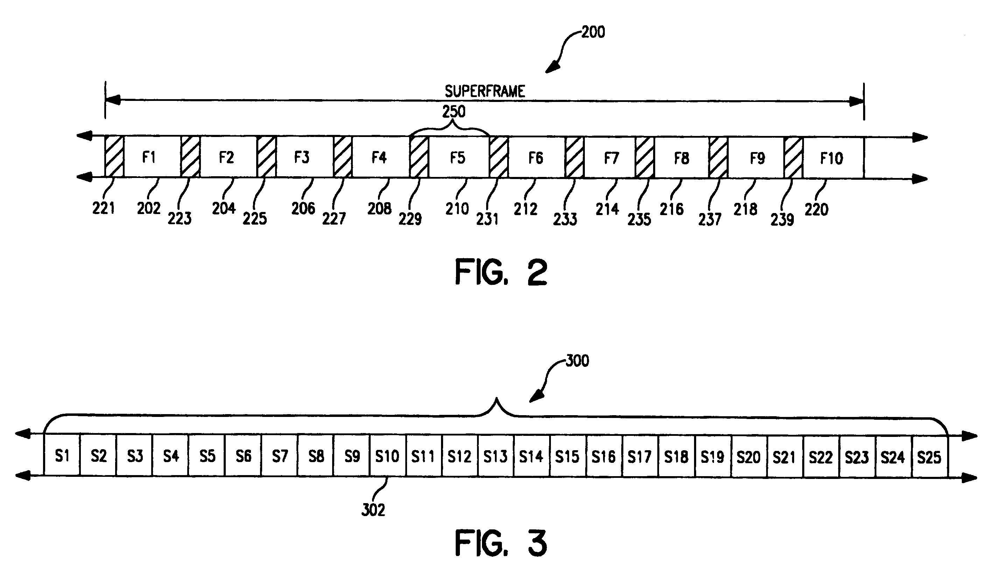

Turning first to Figure 2, that figure illustrates a uniformly distributed control burst structure in accordance with the present invention. As shown in the embodiment of Figure 2, a superframe 200 may be divided, for example, into 10 traffic burst fields 202-220 and 10 control burst fields 221-239. As explained above, each control burst field may contain control information from several different user terminals. It is noted that, although the following detailed description proceeds primarily with reference to sync bursts, the invention applies to other synchronization and control information as well, including, for example, orderwire information.

As explained above with respect to Figure 1, past synchronization methods dedicated a single segment 110 of the superframe 100 to control burst access, and all terminals launched their control bursts during this dedicated period 110. Thus, in accordance with past synchronization methods, several traffic burst fields 101-110 elapsed between control burst fields 111 and 112, creating irregular cadence and cell delay variation.

Figure 3 shows a control burst field 300 (e.g., a single one of the control burst fields 221-239 shown in Figure 2) with 25 control time slots 302 (labeled S1-S25 in Figure 3) Each control time slot 302 represents a period of time during which a user terminal may transmit, for example, a sync burst. As explained above, in a satellite communications system, each terminal in either a standby state or a state of active transmission is allocated at least one dedicated control time slot during which the terminal launches a control burst periodically on an uplink.

As illustrated in Figure 2, the control burst fields 221-239 are distributed throughout the superframe 200. In other words, for a superframe consisting of S frames 250 (e.g., S=10 as, for example, in the embodiment shown in Figure 2) and providing a total of T sync bursts (e.g., T=250) on each frequency multiplexed channel, each traffic burst field 202-220 is preceded by a control burst field having T/S sync bursts (e.g., 25 sync bursts 302 per control burst field 300).

Although the control burst fields 221-239 are preferably contiguous and located at the start of each frame 202-220, the control burst fields 221-239 may be distributed throughout each superframe or grouped together at an alternative location (e.g., the end) in each frame. The distribution may, for example, be one in which each frame includes a control burst field at the same location within every frame. A regular synchronization structure in general is desirable and results when the time slots 302 appear at the same location from frame to frame.

When a user terminal is allocated a control time slot 302, the allocation may be performed in terms of the frame number within the superframe 200 where its control time slot is located, as well as the channel number and control time slot position within the control burst field. For example, a particular user terminal, A, communicating on channel X may be assigned to transmit its sync burst during the seventh control time slot of the fifth frame's control burst field.

One embodiment of the uplink frame structure of the present invention is illustrated by the following example. Assume a system with 175 frequency multiplexed channels, each channel signaling at 550 kilosymbols per second and having a frame period of 93 milliseconds. The resulting frame length is then 51,150 symbols. Part of each 51,150-symbol frame may be allocated to the control burst field and the remainder allocated to the traffic burst field. The signaling duration of a sync burst may be, for example, 64 symbols, and it may be provided for in a sync time slot lasting 72 symbols. Twenty such slots may be provided in every frame for a total of 1440 symbols in the control burst field, leaving 49,710 symbols in the traffic burst field. Thus, the control burst field in this example constitutes an overhead of only approximately 2.8%. It is noted that in this example, T=200, S=10 and T/S=20.

In the example above, each user terminal transmits a sync burst once per superframe (i.e., once every 930 milliseconds), and has a uniform interval of 93 milliseconds between traffic bursts. With the parameters used in this example, there is a sufficient supply of sync burst time slots to accommodate 35,000 (i.e., 175*10*20) active and standby terminals concurrently.

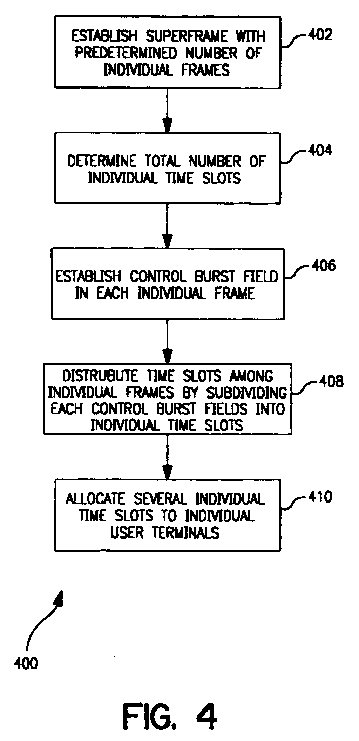

Figure 4 illustrates a flow chart of a method of synchronizing several user terminals transmitting on an uplink in a satellite communications system in accordance with the present invention. The method 400 includes establishing a superframe with a predetermined number of individual frames (step 402). The method 400 also includes determining a total number of individual control time slots (step 404) in a particular superframe. A control burst field is established in each individual frame in the superframe (step 406), and the total number of individual control time slots is distributed among the individual frames in the superframe by dividing each control burst field into individual control time slots (step 408). The individual control time slots are typically then allocated to individual user terminals (step 410).

The present invention provides several advantages over prior synchronization techniques. First, the amount of time during which normal traffic uplink activity is suspended in the present invention is greatly reduced. For example, in the example above, normal traffic uplink activity is suspended (during control burst fields) for a period approximately equal to only 10% of the suspended activity time in prior systems, as can be seen by comparing a control burst field 221-239 to the single relatively long control burst field 111 of the superframe 100. Furthermore, the periodicity of the transmission cadence is highly consistent in the present invention. In addition, the cell delay variation is greatly reduced in the present invention because the interval between traffic bursts is constant.

The above-noted advantages lead to the further advantage of reduced buffer size requirements for the user terminals and satellite. Consequently, there is a significant reduction in the amount of hardware used to support communications. With the reduction in hardware comes a significant reduction in weight, complexity and cost of the satellite communication system.

The present invention thus provides an efficient, low cost, low complexity solution to synchronization of multiple user terminals in a satellite uplink frame structure. While particular elements, embodiments and applications of the present invention have been shown and described, it is understood that the invention is not limited thereto since modifications may be made by those skilled in the art, particularly in light of the foregoing teaching. It is therefore contemplated by the appended claims to cover such modifications and incorporate those features which come within the spirit and scope of the invention.

## Claims

1. A method of providing synchronization and control access to a plurality of user terminals transmitting on an uplink in a satellite communication system, the method comprising:
estabilshing a superframe comprising a predetermined number of individual frames,
determining a total number of individual control time slots;
establishing a control burst field in each of said individual frames; and
distributing said total number of control time slots among said individual frames by subdividing each of said control burst fields into a plurality of individual control time slots.

2. The method of claim 1, wherein said step of distributing comprises subdividing each of said control burst fields into an equal number of individual control time slots.

3. The method of claim 1, further comprising transmitting a timing probe in at least one of said individual control time slots.

4. The method of claim 1, further comprising transmitting orderwire information in at least one of said individual control time slots.

5. The method of claim 1, wherein said step of estabilishing further comprises locating said control burst fields at the same location within each of said individual frames.

6. An uplink frame structure in a satellite communication system, the frame structure comprising:
a superframe comprising a predetermined number of individual frames, each of said individual frames comprising a traffic burst field and a control burst field, and each of said control burst fields comprising a plurality of individual control time slots.

7. The uplink frame structure of claim 6 wherein at least one of said control time slots carries orderwire information.

8. The uplink frame structure of claim 6 wherein said control burst fields are located at the same location within each of said individual frames.

9. A method for synchronizing a plurality of user terminals transmitting on an uplink in a satellite communications system, the method comprising:
determining a total number of individual control time slots;
distributing said total number of control time slots through a plurality of frames to create a regular synchronization structure across a superframe, said total number of individual control time slots greater in number than said plurality of frames.

10. The method of claim 9 wherein said distributing step comprises distributing said total number of control time slots contiguously in a control burst field in each frame.
